# EUROPÄISCHE PATENTSCHRIFT

(11) **EP 0 891 692 B1**
(45) Veröffentlichungstag und Bekanntmachung des Hinweises auf die Patenterteilung: **30.10.2002**
(21) Anmeldenummer: 98111806.0
(22) Anmeldetag: 26.06.1998
(51) Int. Cl.: A01D 34/64

(54) **Aufhängung eines an ein Tragfahrzeug anschliessbaren Mähgehäuses**
Suspension of a mower connectable to a vehicle
Suspension d'une tondeuse connectable à un véhicule

(30) Priorität: 16.07.1997 US 895281
(43) Veröffentlichungstag der Anmeldung: 20.01.1999
(73) Patentinhaber: DEERE & COMPANY, Moline, Illinois 61265-8098 (US)
(72) Erfinder: Ferree, Philip Eugene, Beaver Dam, WI 53916 (US); Davis, Robert Dean Jr, Jackson, Michigan 49202 (US)
(74) Vertreter: Magin, Ludwig Bernhard

(56) Entgegenhaltungen:
- FR-A- 2 608 006
- US-A- 4 779 406
- US-A- 5 079 907
- US-A- 5 079 926
- PATENT ABSTRACTS OF JAPAN vol. 017, no. 001 (C-1014), 5. Januar 1993 & JP 04 237418 A (ISEKI & CO LTD), 25. August 1992
- PATENT ABSTRACTS OF JAPAN vol. 097, no. 002, 28. Februar 1997 & JP 08 256556 A (KUBOTA CORP), 8. Oktober 1996
- PATENT ABSTRACTS OF JAPAN vol. 017, no. 597 (C-1127), 2. November 1993 & JP 05 184217 A (KUBOTA CORP), 27. Juli 1993

## Beschreibung

Die Erfindung betrifft eine Aufhängung eines an ein Tragfahrzeug anschließbaren Mähgehäuses mit einem Rahmen.

Mähfahrzeuge bedürfen einer ständigen Wartung ihrer Mähwerkzeuge. So müssen z. B. in Intervallen der Zustand der Messer geprüft und Verunreinigungen entfernt werden, um einen störungsfreien Mähbetrieb zu ermöglichen. Da in herkömmlichen Mähgehäusen die Mähmesser geschützt untergebracht und auch in einer angehobenen Stellung nicht ohne weiteres zugänglich sind, wurde bereits vorgeschlagen, das Mähgehäuse für Wartungszwecke in eine mehr oder weniger vertikale Wartungsstellung zu bringen, in der seine Unterseite mit den Mähmessern frei zugänglich ist.

So zeigt die US-A-5,079,926 ein Mähfahrzeug mit einem Mähgehäuse, das von einem Rahmen getragen wird. Der Rahmen ist an seinem rückwärtigen Ende vertikal schwenkbar an dem Mähfahrzeug gehalten und stützt sich in seinem vorderen Endbereich mittels Rädern auf dem Boden ab. Eine Höheneinstellvorrichtung ist so ausgebildet, daß ein als Gestänge verwendetes Seil so entspannt werden kann, daß das gesamte Mähgehäuse um die Schwenkachse in eine Wartungsstellung gebracht werden kann.

Das der Erfindung zugrunde liegende Problem wird darin gesehen, daß das manuelle Anheben des Mähgehäuses mit seinem Rahmen viel Kraft erfordert, die nicht von jeder Bedienungsperson aufgebracht werden kann. Außerdem setzt die Schwenkmöglichkeit eine bestimmte Ausbildung der Höheneinstellvorrichtung voraus.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise braucht nur ein Teil des Gewichts angehoben zu werden und der Schwenkweg, bzw. der Hebelarm ist kürzer, so daß ein geringeres Moment zu bewältigen ist. Die Verwendung des Hebels macht es zudem einfacher und sicherer, wenigstens einen der Abschnitte zur Einnahme der Verriegelungsstellung anzuheben. Mittels der Verriegelungsvorrichtung wird sichergestellt, daß die beiden Abschnitte ihre verriegelte Stellung beibehalten, wenn das Mähwerk betrieben wird.

Wenn der Hebel gleichzeitig dazu benutzt wird, auch die Verriegelungsvorrichtung zu betätigen, wird sichergestellt, daß die beiden Abschnitte immer verriegelt sind, wenn der Hebel keine Stellung einnimmt, in der der eine Abschnitt in seine Wartungsstellung gebracht wird.

Die Verwendung eines Lenkers und eines Halteteils, die von dem Hebel aktivierbar sind, erlaubt eine Arretierung des beweglichen Abschnitts bzw. eine Betätigung der Verriegelungsvorrichtung auch unter komplizierten räumlichen Bedingungen.

Die starre Verbindung beider Abschnitte miteinander kann auf einfache Weise dadurch erfolgen, daß der Halteteil an beiden Abschnitten anliegt und dabei das Gelenk überbrückt bzw. blockiert.

Wenn der Hebel aufgrund der beim Mähbetrieb auftretenden und durch die Verriegelungsvorrichtung übertragenen Kräfte in die Stellung gedrängt wird, in der er die Verriegelungsvorrichtung in ihrer sperrenden Stellung hält, kann es nicht geschehen, daß während des rauhen Mähbetriebs die Sperre aufgehoben wird; dies bedarf vielmehr einer beabsichtigten Handlung der Bedienungsperson. Damit der Hebel auch stets seine sperrende Stellung einnimmt und dies auch für die Bedienungsperson erkennbar ist, ist eine Lasche vorgesehen, die dessen Endstellung definiert.

Die Anordnung einer Kraftlinie auf einer Seite der Schwenkachse des Hebels erzeugt ein Totpunktmerkmal, das auf einfachste Weise sicherstellt, daß der Hebel nicht ohne beabsichtigte Krafteinleitung aus einer Stellung in eine andere gelangt.

Ein solches Totpunktmerkmal erzeugt nicht nur eine sperrende Wirkung auf der einen Seite der Schwenkachse, sondern auch eine Unterstützung, sobald der Totpunkt überschritten ist.

Wenn beide Abschnitte des Rahmens vertikal schwenkbar getragen werden, können nach der Entriegelung beide Abschnitte in dem Gelenk aufgrund des Gewichts nach unten schwenken und dadurch bereits die Schwenkbewegung des betreffenden Abschnitts in die Wartungsstellung einleiten und unterstützen.

In der Zeichnung ist ein nachfolgend näher beschriebenes Ausführungsbeispiel der Erfindung dargestellt. Es zeigt:
- Fig. 1: ein Mähgehäuse in perspektivischer Draufsicht,
- Fig. 2: einen Ausschnitt des Mähgehäuses in gleicher Ansicht mit einer Verriegelungsvorrichtung ,
- Fig. 3: das Mähgehäuse aus Figur 1 in Seitenansicht,
- Fig. 4: den Bereich der Verriegelungsvorrichtung in vergrößerter Darstellung von der Seite,
- Fig. 5: das Mähgehäuse in Seitenansicht, wobei die Verriegelungsvorrichtung entriegelt ist, und
- Fig. 6: das Mähgehäuse in einer Wartungsstellung.

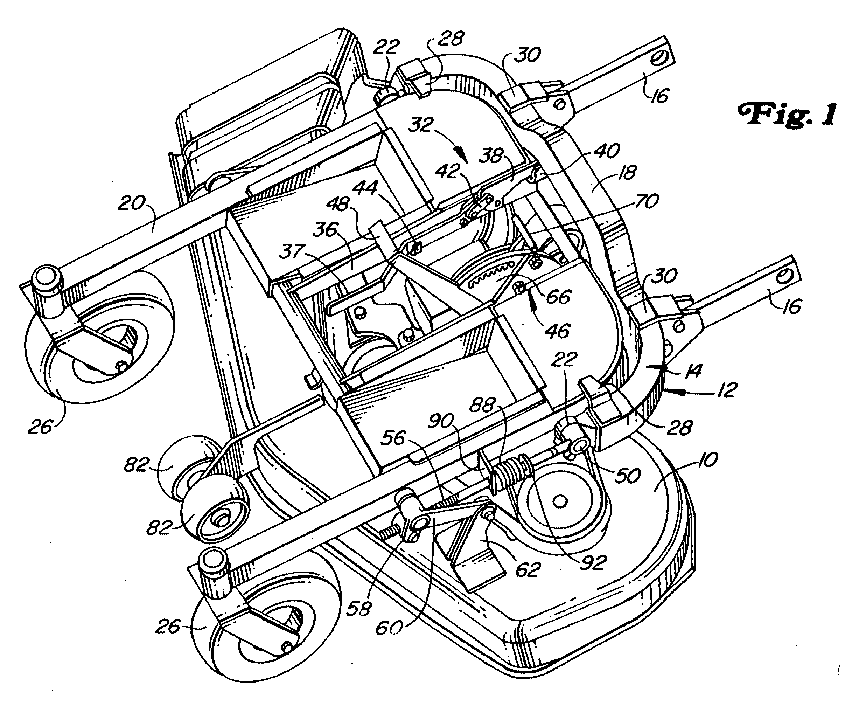

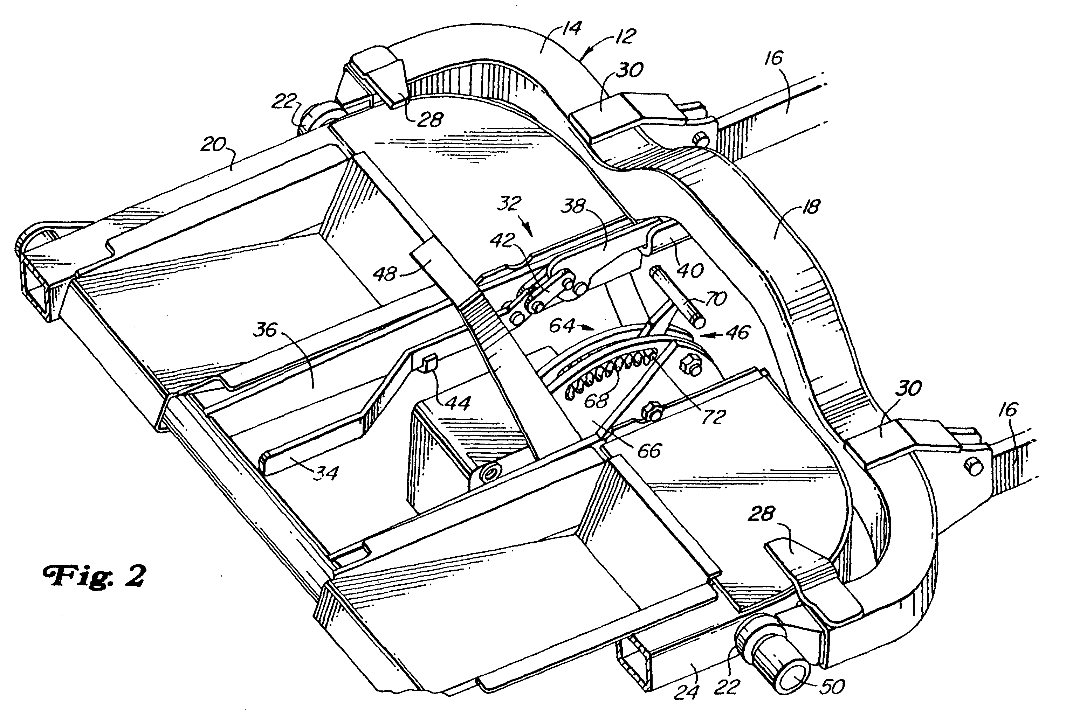

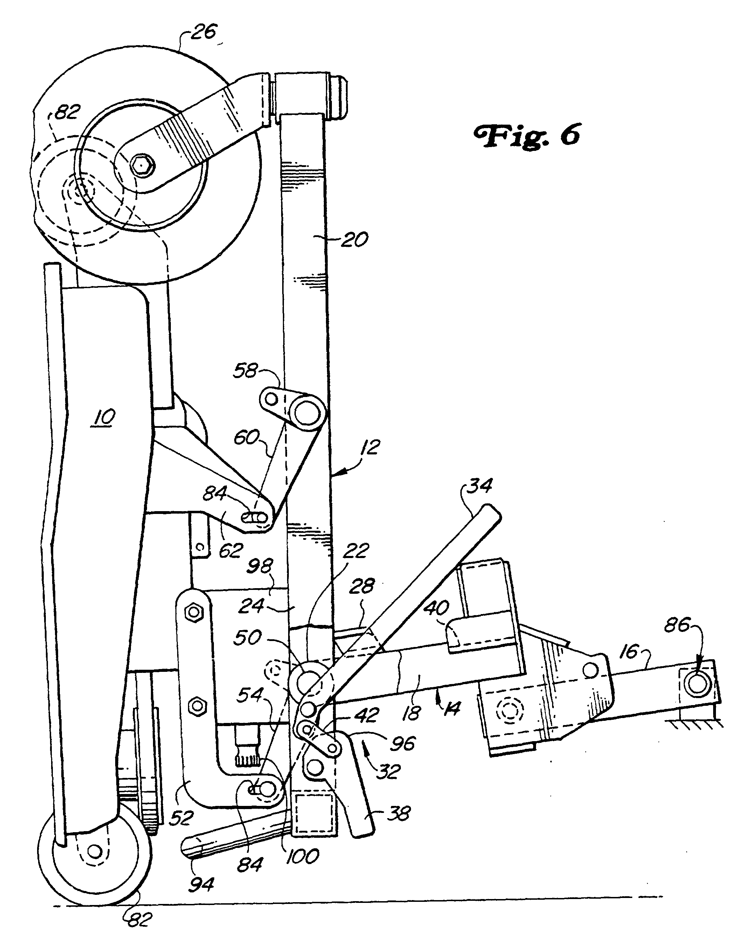

In den Figuren 1 bis 6 ist ein bevorzugtes Ausführungsbeispiel der Erfindung gezeigt. Ein nicht gezeigtes Mähfahrzeug enthält einen Motor oder eine Antriebsquelle, die betriebsmäßig Bodenräder antreibt, um das Mähfahrzeug fortzubewegen. Die Antriebsquelle treibt auch Mähmesser innerhalb eines Mähgehäuses 10 an, das vor dem Mähfahrzeug angeordnet ist. Das vorne angebaute Mähgehäuse 10 ist im Betrieb mittels eines Rahmens 12 an das Mähfahrzeug angeschlossen. Der Rahmen 12 enthält einen ersten oder rückwärtigen Abschnitt 14, der schwenkbar an das Mähfahrzeug angeschlossen ist. Der rückwärtige Abschnitt 14 weist ein Paar von als Schiebearme ausgebildeten Armen 16, die zwischen den vorderen Rädern des Mähfahrzeugs schwenkbar angeschlossen sind, und einen Träger 18 auf, der mit den Armen 16 verbunden ist. Der Rahmen 12 enthält auch einen zweiten oder vorderen Abschnitt 20, der mittels Gelenken 22 mit dem rückwärtigen Abschnitt 14 schwenkbar verbunden ist. Der vordere Abschnitt 20 enthält einen zweiten U-förmigen Träger 24, an den ein Paar von als Nachlaufräder ausgebildeten Rädern 26 montiert ist. Ein erstes Paar Anschläge 28, das an den rückwärtigen Abschnitt 14 angebracht ist, begrenzt die Schwenkbewegung des vorderen Abschnitts 20 mit Bezug auf den rückwärtigen Abschnitt 14 in einer Richtung. Der vordere Abschnitt 20 ruht an zweiten Anschlägen 30, wenn das Mähgehäuse 10 nach oben in seine Wartungsstellung geschwenkt ist, wie dies in Figur 6 gezeigt ist. Das zweite Paar Anschläge 30, das an den rückwärtigen Abschnitt 14 montiert ist, begrenzt die Schwenkbewegung des vorderen Abschnitts 20 in der anderen Richtung, wenn das Mähgehäuse 10 in die Wartungsstellung angehoben wird, in der die Unterseite des Mähgehäuses 10 offen ist. Der vordere und rückwärtige Abschnitt 20 und 14 sind während des Betriebs mittels einer Verriegelungsvorrichtung 32 starr miteinander verbunden, um eine Schwenkbewegung des vorderen Abschnitts 20 gegenüber dem rückwärtigen Abschnitt 20 zu verhindern, die im Detail nachfolgend beschrieben wird.

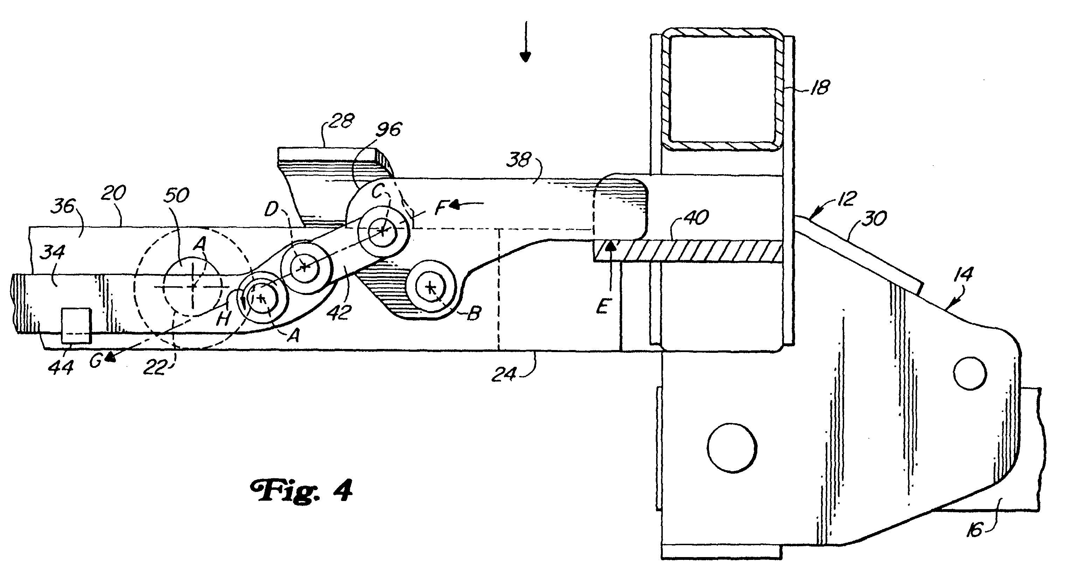

Die Verriegelungsvorrichtung 32 erstreckt sich im Betrieb zwischen dem vorderen und dem rückwärtigen Abschnitt 20 und 14, um zu verhindern, daß der vordere und der rückwärtige Abschnitt 20 und 14 mit Bezug zueinander während des Mähbetriebs schwenken. Die Verriegelungsvorrichtung 32 kann von einer Bedienungsperson wahlweise gelöst werden, damit das Mähgehäuse 10 in seine Wartungsstellung hochgeschwenkt werden kann. Ein Hebel 34, der von der Bedienungsperson ergriffen werden kann, ist an ein Rahmenteil 36 angebracht, der einen Teil des vorderen Abschnitts 20 darstellt. Der Hebel 34 ist für eine Schwenkbewegung mit Bezug auf den Rahmenteil 36 um eine Achse A gelagert, wie dies in Figur 4 zu erkennen ist. Ein Halteteil 38 ist für eine Schwenkbewegung um eine Achse B ebenfalls an dem Rahmenteil 36 angebracht. Der Halteteil 38 kann an einer Lasche 40 angelegt werden, die mit dem rückwärtigen Abschnitt 14 verbunden ist. Wie dies noch im einzelnen beschrieben wird, dient die Anlage des Halteteils 38 an der Lasche 40 dazu, den vorderen und den rückwärtigen Abschnitt 20 und 14 aneinander festzulegen, und sie verhindert eine Schwenkbewegung des vorderen Abschnitts 20 in Bezug auf den rückwärtigen Abschnitt 14 um die Gelenke 22. Ein dazwischen geschalteter Lenker 42 ist an den Halteteil 38 für eine Schwenkbewegung um eine Achse C und an den Hebel 34 für eine Schwenkbewegung um eine Achse D angeschlossen. Der Lenker 42 überträgt die Kräfte und Bewegungen zwischen dem Halteteil 38 und dem Hebel 34. Eine Lasche 44 ist an den Rahmenteil 36 angeschlossen und dient der Anlage des Hebels 34, um dessen Weg in einer Richtung zu begrenzen.

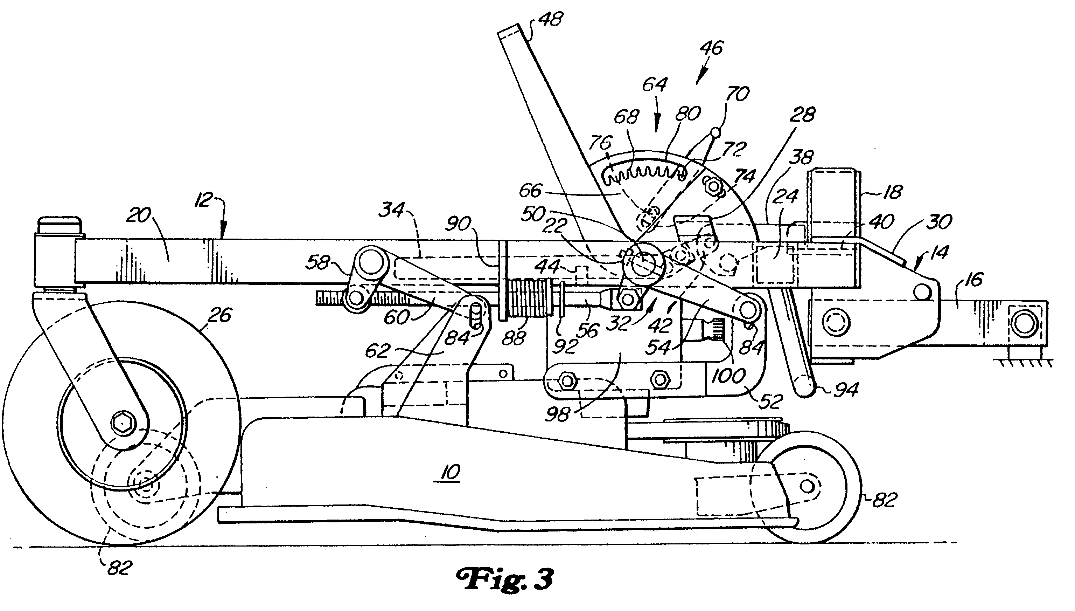

Das vorliegende Ausführungsbeispiel enthält eine Höheneinstellvorrichtung 46 zur Einstellung der Höhe des Mähgehäuses 10, die am besten in Figur 3 gezeigt ist. Die Höheneinstellvorrichtung 46 enthält ein Pedal 48, das von der Bedienungsperson per Fuß verstellt werden kann. Das Pedal 48 wird von einer Welle 50 schwenkbar getragen, die an dem vorderen Abschnitt 20 aufgenommen ist. Ein L-förmiger Lenker 52 ist mit dem Pedal 48 und ebenfalls mit dem rückwärtigen Mittenbereich des Mähgehäuses 10 schwenkbar verbunden. Erste Arme 54 sind mit den äußeren Enden der ersten Welle 50 verbunden. Stangen 56 erstrecken sich zwischen den ersten Armen 54 und zweiten Armen 58, die von dem vorderen Abschnitt 20 schwenkbar getragen werden. Dritte Arme 60, die mit den zweiten Armen 58 verbunden sind, erstrecken sich nach außen und sind mit Haltern 62 verbunden, die mit der Oberseite des Mähgehäuses 10 verbunden sind. Die Höhe des Mähgehäuses 10 oberhalb des Bodens wird dadurch eingestellt, daß die Bedienungsperson das Pedal 48 mit ihrem Fuß schwenkt. Ein Verriegelungsmechanismus 64 ist ebenfalls in der Höheneinstellvorrichtung 46 vorgesehen, um das Mähgehäuse 10 in einer ausgewählten Schnitthöhe festzulegen. Ein Paar Platten 66 ist an den vorderen Abschnitt 20 angeschlossen und bildet eine Mehrzahl von sich aufwärts erstreckenden Zähnen 68. Ein Griff 70 ist zwischen den Platten 66 angeordnet und enthält einen Bolzen 72, der in den Abständen zwischen benachbarten Zähnen 68 angeordnet werden kann. Ein Schlitz 74 in dem Griff 70 nimmt eine Sperre 76 in sich auf, die funktional zwischen den Platten 66 befestigt ist. Der Schlitz 74 erlaubt es, daß der Griff 70 von der Bedienungsperson nach oben gezogen wird, so daß der Bolzen 72 von den Zähnen 68 frei wird, was es dem Griff 70 ermöglicht, um die Sperre 76 in eine neue Stellung geschwenkt zu werden, die einer anderen Schnitthöhe entspricht. Eine Spannfeder 78, die sich zwischen dem Bolzen 72 und der Sperre 76 erstreckt, drängt den Griff 70 derart nach unten, daß der Bolzen 72 in einen der Spalte zwischen den Zähnen 68 gedrückt wird. Das Pedal 48 enthält einen Anschlag 80, der gegen den Griff 70 schlägt, um damit die Höhe einzustellen, in der das Mähgehäuse 10 über dem Boden getragen wird.

Eine Mehrzahl von Einstellrädern 82 ist an das Mähgehäuse 10 angeschlossen und kommt in Berührung mit dem Boden, wenn während des Mähbetriebs Bodenunebenheiten angetroffen werden. Sobald diese Einstellräder 82, die ein Abschälen des Bodens vermeiden sollen, den Boden berühren, kann das Mähgehäuse 10 mit Bezug auf den Rahmen 12 nach oben ausweichen, um über die Bodenunebenheiten zu gleiten. Schlitze 84, die in dem Gestänge, das das Mähgehäuse 10 an dem vorderen Bereich 20 trägt, vorgesehen sind, sorgen für Spiel, damit sich das Mähgehäuse 10 auf diese Weise in Bezug auf den Rahmen 12 nach oben bewegen kann. Diese Schlitze 84 sind in den Haltern 62 und in den L-förmigen Lenker 52 eingeformt.

Als nächstes wird der Betrieb des erfindungsgemäßen Ausführungsbeispiels im Detail beschrieben. Wenn das Mähfahrzeug im Mähbetrieb arbeitet, befinden sich der Rahmen 12 und die Verriegelungsvorrichtung 32 in dem Zustand, wie er in den Figuren 1 bis 4 gezeigt ist. Der vordere und der rückwärtige Abschnitt 20 und 14 sind mittels der Verriegelungsvorrichtung 32 fest miteinander verbunden, so daß keine Schwenkbewegung des vorderen Abschnitts 20 mit Bezug auf den rückwärtigen Abschnitt 14 um die Gelenke 22 stattfindet. Die Arme 16, die mittels Kupplungen 86 an das Mähfahrzeug angeschlossen sind, ermöglichen es dem Rahmen 12 und dem Mähgehäuse 10, in bezug auf das Mähfahrzeug zu schwenken, um sich auf- und abwärts über Bodenunebenheiten zu bewegen. Die Verriegelungsvorrichtung 32 dient dazu, den vorderen und den rückwärtigen Abschnitt 20 und 14 als eine Einheit miteinander zu verriegeln, wenn der Hebel 34 an die Lasche 44 angelegt ist. Die Verriegelungsvorrichtung 32 bietet ein Totpunktmerkmal, das die Verriegelungsvorrichtung 32 in ihrer Lage festhält und den vorderen und den rückwärtigen Abschnitt 20 und 14 aneinander sichert. Wie es am besten in Figur 4 gesehen werden kann, befindet sich der Hebel 34 in seiner untersten Stellung in Anlage an der Lasche 44 und der Halteteil 38 liegt an der Lasche 40 an. Der Lenker 42 ist derart gelegen, daß ein Pfeil oder eine Gerade G, der/die sich durch die Achsen C und D erstreckt, auf einer Seite der Achse A vorbeiführt. Da das Gewicht des Mähgehäuses 10 den vorderen Abschnitt 20 nach unten drängt, leitet das Gewicht des Mähgehäuses 10 über die Lasche 40 in der Richtung eines Pfeils E eine Kraft in den Halteteil 38 ein. Diese Kraft drängt den Halteteil 38 dazu, um die Achse B in der Richtung des Pfeils F zu schwenken. Dies neigt dazu, den Lenker 42 in der Richtung des Pfeils G zu drängen. Die Kraft wird mittels des Lenkers 42 entlang des Pfeils G auf den Hebel 34 übertragen. Da der Pfeil G die Kraft auf einer Seite der Achse A vorbeiführt, drückt die Kraft, die mittels des Lenkers 42 in den Hebel 34 eingeleitet wird, den Hebel 34 entgegen dem Uhrzeigerdrehsinn in der Richtung eines Pfeils H um die Achse A. Jedoch wird die Schwenkbewegung des Hebels 34 in dieser Richtung durch die Anlage des Hebels 34 an der Lasche 44 begrenzt. Daher bleiben der Hebel 34, der Lenker 42 und der Halteteil 38 ortsfest, wenn sich der Hebel 34 an der Lasche 44 anlegt. Das Totpunktmerkmal stellt sicher, daß eine Kraft E in einer Weise durch das Gestänge des Hebels 34 übertragen wird, daß der Hebel 34 in der Richtung des Pfeils H so gedrängt wird, daß der Hebel 34 stationär bleibt. Aufgrund des Totpunktmerkmals verursachen das Gewicht des vorderen Abschnitts 20 und des Mähgehäuses 10 den Hebel 34, den Lenker 42 und den Halteteil 38 starr in ihrer Lage zu verharren, so daß die Verriegelungsvorrichtung 32 dadurch den vorderen und den rückwärtigen Abschnitt 20 und 14 in ihrer jeweiligen Ausrichtung sicher verriegelt. Der Halteteil 38 widersteht fest den Kräften, die von der Lasche 40 in der Richtung des Pfeils E in ihn eingeleitet werden, und die Abschnitte 14 und 20 bleiben starr miteinander verbunden.

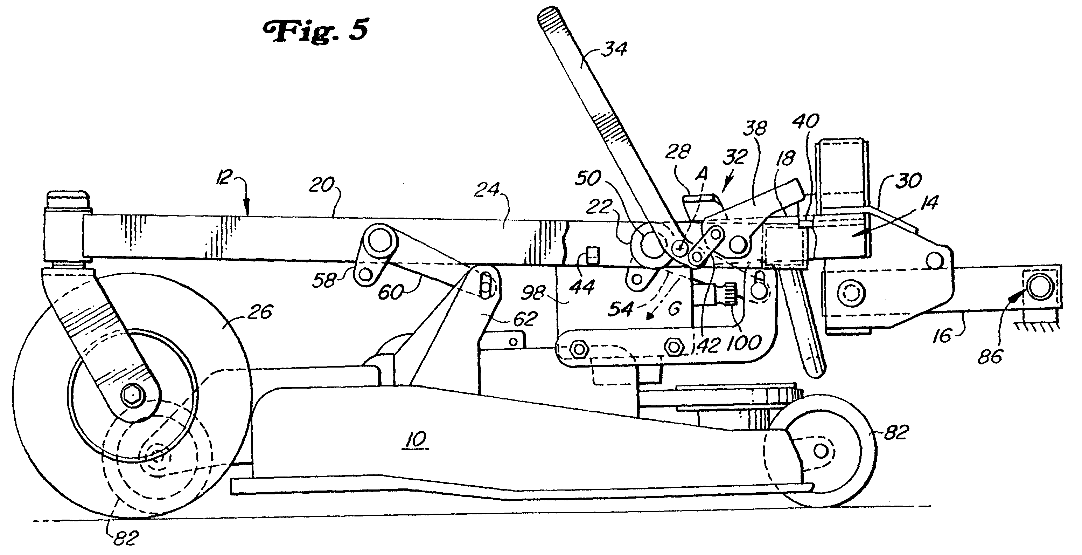

Um das Mähgehäuse 10 oben in seiner Wartungsstellung zu arretieren, beendet die Bedienungsperson die Vorwärtsfahrt, stellt die Antriebsquelle des Mähfahrzeugs ab und entfernt eine Schnellkupplungshülse von der Welle, die das Mähmesser antreibt. Der Teil der Antriebswelle, der mit dem Mähgehäuse 10 verbunden ist, kann auf einem Ständer 94 ruhen, der die Antriebswelle schützt, wenn das Mähgehäuse 10 in seine Wartungsstellung geschwenkt wird. Die Bedienungsperson hebt dann den Hebel 34 aus seiner in den Figuren 1 bis 4 gezeigten und in Eingriff mit der Lasche 44 stehenden Stellung in einer ersten Richtung in die in Figur 5 gezeigte Stellung an. Wenn der Hebel 34 angehoben wird, schwenkt die Achse D im Uhrzeigerdrehsinn aus ihrer in Figur 4 gezeigten Stellung, was bewirkt, daß der Lenker 42 schwenkt. Die Kraft, die entlang des Pfeils G angreift und von dem Gewicht des Mähgehäuses 10 und dem vorderen Abschnitt 20 verursacht wird, drängt den Hebel 34 in der Richtung des Pfeils H zurück zu der Lasche 44, bis die Gerade G, die durch die Achsen C und D verläuft, in Deckung mit der Achse A gelangt, so daß die Bedienungsperson eine Kraft auf den Hebel 34 einleiten muß, um die Verriegelungsvorrichtung 32 zu lösen. Aber sobald die Gerade G die Achse A oder den Totpunkt überquert hat, so daß sich die Gerade G unterhalb der Achse A erstreckt, wie dies in Figur 5 gezeigt ist, wird der Pfeil E den Teil 38 in der Richtung des Pfeils F und den Lenker 42 in der Richtung des Pfeils G drängen, so daß der Hebel 34 von der Lasche 44 in dem Uhrzeigerdrehsinn wegschwenkt, wie dies in den Figuren 4 und 5 zu sehen ist. Der vordere Abschnitt 20 kann dann leicht unter seinem eigenen Gewicht nach unten schwenken. Ein Schwenkvorgang des Hebels 34 nach oben weg von der Lasche 44 bewirkt, daß der Halteteil 38 im Uhrzeigerdrehsinn in eine in Figur 5 gezeigte Stellung schwenkt, bis der Halteteil 38 von der Lasche 40 im allgemeinen frei ist. Wenn die Verriegelungsvorrichtung 32 gelöst ist und der vordere und der rückwärtige Abschnitt 20 und 14 nicht mehr starr zusammengehalten werden, schwenken der vordere und der rückwärtige Abschnitt 20 und 14 mit Bezug zueinander um die Gelenke 22. Die Gelenke 22 werden unter dem Gewicht des Rahmens 12 und des Mähgehäuses 10 nach unten fallen, wenn der vordere und der rückwärtige Abschnitt in bezug aufeinander schwenken. Der vordere Abschnitt 20 wird aus der Waagrechten in dem Uhrzeigerdrehsinn um die Räder 26 schwenken, bis die Einstellräder 82 in der in Figur 5 gezeigten Stellung auf dem Boden zur Ruhe kommen. Wenn die Gelenke 22 nach unten gehen, schwenken der rückwärtige Abschnitt 14 und die Arme 16 entgegen dem Uhrzeigerdrehsinn um die Kupplungen 86 zu der in Figur 5 gezeigten Stellung.

Wenn das Mähgehäuse 10 auf dem Boden ruht, nachdem die Bedienungsperson den Hebel 34 wie in Figur 5 gezeigt, angehoben hat, kann die Bedienungsperson den vorderen Abschnitt 20 des Mähgehäuses 10 ergreifen, um das Mähgehäuse 10 und den vorderen Abschnitt 20 nach oben zu schwenken. Der vordere Abschnitt 20 und das Mähgehäuse 10 können mit Bezug auf den rückwärtigen Abschnitt 14 um die Gelenke 22 nach oben geschwenkt werden, bis der vordere Abschnitt gegen die Anschläge 30 anschlägt, die auf den rückwärtigen Abschnitt 14 montiert sind. Wenn sich das Mähgehäuse 10 und der vordere Abschnitt 20 in ihrer in Figur 6 gezeigten Stellung befinden, ist der Bedienungsperson Zugang zu der Unterseite des Mähgehäuses 10 gegeben, um es ihr zu ermöglichen, Wartungsarbeiten, wie Messeraustausch und Messerreinigung vorzunehmen.

Um das Mähgehäuse 10 in seinen Betriebszustand zurück zu versetzen, ergreift die Bedienungsperson das Mähgehäuse 10 oder den vorderen Abschnitt 20 und schwenkt das Mähgehäuse 10 und den vorderen Abschnitt 20 zurück auf den Boden. Wenn das Mähgehäuse 10 auf dem Boden ruht, wie dies wieder in Figur 5 gezeigt ist, nehmen der vordere und der rückwärtige Abschnitt 20 und 14 eine geringe Neigung zu der Waagrechten ein und müssen geringfügig in ihre horizontale Stellung angehoben werden, damit sie in ihrem betriebsmäßigen Zustand verriegelt werden können. Um dies zu erreichen, wird die Bedienungsperson den Hebel 34 in einer zweiten Richtung nach unten und vorne schwenken. Die Abwärtsschwenkbewegung des Hebels 34 in der Richtung des Pfeils H bewirkt, daß der Lenker 42 im allgemeinen nach oben und der Halteteil 38 im Uhrzeigerdrehsinn um die Achse B schwenkt. Der Halteteil 38 schlägt an der Lasche 40 an, und wenn die Bedienungsperson damit fortfährt, den Hebel 34 in der Richtung des Pfeils H zu schwenken, schwenkt der Halteteil 38 im Uhrzeigerdrehsinn und in Anlage mit der Lasche 40 derart, daß der vordere Abschnitt 20 angehoben wird. Der vordere Abschnitt 20 schwenkt nach oben, bis er an den Anschlägen 28 an dem rückwärtigen Abschnitt 14 anschlägt, wenn der vordere Abschnitt 20 die waagrechte Ausrichtung erreicht. Die Verriegelungsvorrichtung 32 des vorliegenden Ausführungsbeispiels macht es dadurch der Bedienungsperson möglich, eine Kraft auf den Hebel 34 einzuleiten, die hilft, den vorderen Abschnitt 20 zur Ausrichtung mit dem rückwärtigen Abschnitt 14 anzuheben. Wenn der vordere Abschnitt 20 in dieser Art entgegen dem Uhrzeigerdrehsinn nach oben schwenkt, schwenkt der rückwärtige Abschnitt 14 im Uhrzeigerdrehsinn in eine allgemein horizontale Ausrichtung. Wenn der Hebel 34 von der Bedienungsperson nach unten gedrückt wird, bewegt sich der Lenker 42 derart, daß der sich mit dem Lenker 42 deckende Pfeil G über die Achse A und über den Totpunkt nach oben hinaus schwenkt.

Sobald der Pfeil G auf diese Weise den Totpunkt überschritten hat, wird die Verriegelungsvorrichtung 32 sicher arretiert, um zu vermeiden, daß die Abschnitte 14 und 20 in bezug aufeinander schwenken, und das Totpunktmerkmal nutzt das Gewicht des Mähgehäuses 10 und des vorderen Abschnitts 20 aus, um die Verriegelungsvorrichtung 32 in ihrem sichernden Zustand zu halten, wie dies oben beschrieben worden ist.

Wenn der Hebel 34 angehoben und die Verriegelungsvorrichtung 32 gelöst ist, kann der Halteteil 38 unter die Lasche 40 geraten, wenn das Mähgehäuse 10 auf den Boden fällt. Wenn die Bedienungsperson die Verriegelungsvorrichtung 32 sichern möchte, nachdem dies geschehen ist, kann sie das Pedal 48 rückwärts gegen das Mähfahrzeug drücken, was bewirkt, daß das Pedal 48 in dem Schlitz 84 des Lenkers 82 anschlägt. Wenn die Bedienungsperson fortfährt, das Pedal 48 nach hinten und oben zu dem Mähfahrzeug hinzudrücken, wird die Kraft, die von der Bedienungsperson aufgebracht wird, die Welle 50 anheben und dabei ebenfalls die Gelenke 22 zwischen dem vorderen und dem rückwärtigen Abschnitt 20 und 14 anheben. Ein Anheben der Gelenke 22 bewirkt, daß der vordere und der rückwärtige Abschnitt 20 und 14 nach oben zu ihren horizontalen Stellungen schwenken. Wenn der vordere Abschnitt 20 nach oben schwenkt, erhebt sich der Halteteil 38 in eine Stellung, in der er die Lasche 40 berührt. Wenn der Halteteil 38 einmal gegen die Lasche 40 angelegt ist, kann die Bedienungsperson den Hebel 34 nach unten drücken, um den Halteteil 38 nach unten gegen die Lasche 40 zu drücken, um den vorderen und den rückwärtigen Abschnitt 20 und 14 wie oben beschrieben in ihre horizontale Stellungen zurückzubringen.

Ein Eckbereich 96 des Halteteils 38, der am besten in Figur 4 zu sehen ist, ist derart bemessen, daß er an dem Hebel 34 anschlagen kann, wenn der Halteteil 38 entgegen dem Uhrzeigerdrehsinn um die Achse B schwenkt. Ein Anschlagen des Eckbereichs 96 an dem Hebel 34 in dieser Art dient dazu, zu verhindern, daß der Halteteil 38 zu sehr entgegen dem Uhrzeigerdrehsinn schwenkt.

Die Figuren 3, 5 und 6 zeigen ein Getriebe 98 des Mähgehäuses 10 und eine Eingangswelle 100. Während des Betriebs ist eine Antriebswelle ständig mit der Eingangswelle 100 des Getriebes 98 verbunden. Die Eingangswelle 100 erstreckt sich zu einer Fahrzeugkupplung und wird im Betrieb von dem Fahrzeugmotor angetrieben. Bevor die Bedienungsperson das Mähgehäuse 10 und den Rahmen 12 in ihre Wartungsstellung hochschwenkt, trennt die Bedienungsperson die Antriebswelle mittels herkömmlicher Kupplungsmittel von der Kupplung. Die Antriebswelle bleibt mit der Eingangswelle 100 des Getriebes 98 fest verbunden, wenn das Mähgehäuse 10 und der Rahmen 12 in die Wartungsstellung hochgeschwenkt werden. Ein Universalgelenk erlaubt es der Antriebswelle in bezug auf die Eingangswelle 100 zu schwenken. Der Ständer 94 schützt die Antriebswelle wenn das Mähgehäuse 10 und der Rahmen 12 nach oben in ihre Wartungsstellung geschwenkt werden. Die Antriebswelle und das Universalgelenk sind in den Figuren 3, 5 und 6 der Übersichtlichkeit wegen nicht gezeigt.

Als nächstes wird der Betrieb der Höheneinstellvorrichtung 46 mehr im Detail beschrieben. Die Höheneinstellvorrichtung 46 ist im Betrieb, wenn der vordere und der rückwärtige Abschnitt 20 und 14 während des normalen Mähbetriebs mittels der Verriegelungsvorrichtung 32 zu einer Einheit zusammengeschlossen sind. Um die Höhe des Mähgehäuses 10 und damit auch die Höhe, bei der das Gras mit dem Mähgehäuse 10 geschnitten wird, zu ändern, drückt die Bedienungsperson mit dem Fuß gegen das Pedal 48. Dies schwenkt das Pedal 48 um eine von der Welle 50 definierte Achse nach vorne. Wenn das Pedal 48 nach vorne gedrückt wird, bewegt sich der Anschlag 80 des Pedals 48 von dem Bolzen 72 weg und verliert die Berührung mit ihm, was Spiel für den Bolzen 72 besorgt, um den Bolzen 72 nach oben aus dem Spalt zwischen benachbarten Zähnen 68 zu bewegen. Die Bedienungsperson kann den Griff 70 nach oben ziehen, um den Bolzen 72 außer Eingriff mit den Zähnen 68 zu ziehen, und kann den Griff 70 in eine neue Stellung bringen, die einer neuen Schnitthöhe entspricht. Sobald der Bolzen 72 wieder in einen ausgewählten Spalt eingesetzt ist, kann die Bedienungsperson das Pedal 48 zu sich zurückkommen lassen, bis der Anschlag 80 wieder gegen den Griff 70 anschlägt. Das Pedal 48 wird sich dann in einer anderen Stellung als bisher befinden, was bewirkt, daß die Welle 50, die Arme 54, die Stangen 56, die zweiten und die dritten Arme 58 und 60 und die Halter 62 neue Stellungen einnehmen. Sowie diese Teile ihre neue Stellungen einnehmen, bewegt sich das Mähgehäuse 10 in eine neue Schnitthöhe mit Bezug auf den Boden.

Eine Feder 88 wird von den Stangen 56 aufgenommen und befindet sich unter Druck zwischen einem Teil 90 und einem Flansch 92 der Stange 56. Die Kraft der Feder 88 drückt den Flansch 92 und die Stange 56 von dem Teil 90 des vorderen Abschnitts 20 weg und bildet somit einen Hubunterstützungsmechanismus, der der Bedienungsperson hilft, das Mähgehäuse 10 während der Einstellung der Schnitthöhe anzuheben.

Die Verriegelungsvorrichtung 32 wird von dem vorderen Abschnitt 20 getragen und legt sich an der Lasche 40 an, die auf den rückwärtigen Abschnitt 14 zur Verriegelung der Abschnitte 14 und 20 montiert ist. Allerdings könnte die Verriegelungsvorrichtung 32 nach diesem Ausführungsbeispiel auch angepaßt werden, so daß sie an dem rückwärtigen Abschnitt 14 zur Anlage an dem vorderen Abschnitt 20 montiert werden könnte, ohne daß man sich damit von der Erfindung entfernen würde.

Die vorliegende Erfindung liefert somit ein Mähfahrzeug mit einem Mähgehäuse 10, das nach oben in eine Wartungsstellung geschwenkt werden kann, in der das Mähgehäuse 10 zur Wartung zugänglich ist. Der Mechanismus kann leicht bedient werden, so daß der Vorgang des Schwenkens des Mähgehäuses 10 in seine Wartungsstellung nicht schwierig und umständlich ist. Die Verriegelungsvorrichtung 32 nach der vorliegenden Erfindung kann manuell bedient werden, so daß die Kosten für die Herstellung und den Zusammenbau des Mechanismus relativ niedrig sind. Teuere Komponenten wie Hydraulikzylinder sind bei der vorliegenden Erfindung nicht erforderlich. Die Verriegelungsvorrichtung 32 verbindet den vorderen und den rückwärtigen Abschnitt 20 und 14 während des Mähbetriebs starr miteinander. Das Totpunktmerkmal nach der vorliegenden Erfindung erlaubt es, die Verriegelungsvorrichtung 32 relativ einfach und mit wenigen Teilen auszuführen. Der Vorgang, das Mähgehäuse 10 in seinen normalen Mähbetrieb zurück zu versetzen, erfordert von der Bedienungsperson nicht, große Kräfte in umständlichen Lagen aufzubringen, um das Mähgehäuse 10 und den vorderen und den rückwärtigen Abschnitt 20 und 14 in ihre Verriegelungsstellung zu bringen. Eine Verstellung des Hebels 34 der Verriegelungsvorrichtung 32 ermöglicht es der Bedienungsperson, den vorderen und den rückwärtigen Abschnitt 20 und 14 leicht in ihre jeweiligen waagrechten Stellungen zu bringen, in denen sie miteinander verbunden werden können. Die Verriegelungsvorrichtung 32 dient zwei Zwecken, nämlich der Unterstützung der Bedienungsperson beim Anheben des vorderen und rückwärtigen Abschnitts 20, 14 in ihre Verriegelungsstellung und zum sicheren Verbinden des vorderen und des rückwärtigen Abschnitts 20 und 14 aneinander. Die zwei Zwecken dienende Verriegelungsvorrichtung 32 hilft somit, die Anzahl der Teile zu reduzieren, die für den Mechanismus erforderlich sind, und hilft, die Verriegelung, die Entriegelung und die Bedienung zu vereinfachen. Die vorliegende Erfindung liefert auch eine Höheneinstellvorrichtung 46, die es der Bedienungsperson erlaubt, eine Kraft mit ihrem Fuß aufzubringen und eine neue Schnitthöhe einzustellen, in der das Mähgehäuse 10 von dem Rahmen 12 gehalten wird. Die Höheneinstellvorrichtung 46 enthält einen Griff 70 und einen Bolzen 72, der mit Zähnen 68 einer Platte 66 in Eingriff gelangt, um das Mähgehäuse 10 in der gewählten Stellung zu sichern. Die Höheneinstellvorrichtung 46 ist relativ einfach im Aufbau und in der Bedienung. Es sind keine losen Teile vorhanden, die verlegt werden könnten.

## Patentansprüche

1. Aufhängung eines an ein Tragfahrzeug anschließbaren Mähgehäuses (10) mit einem Rahmen (12), **dadurch gekennzeichnet, daß** der Rahmen (12) aus einem ersten und einem zweiten Abschnitt (14) und (20) gebildet ist, die mittels eines Gelenks (22) mit einer zur Aufstandsfläche parallelen Schwenkachse vertikal schwenkbar miteinander verbunden sind, daß eine Verriegelungsvorrichtung (32) vorgesehen ist, die beide Abschnitte (14, 20) in einer Betriebsstellung in eine starre Beziehung zueinander bringt, und daß an wenigstens einem der Abschnitte (20, 14) ein Hebel (34) angreift, der zur Verstellung wenigstens eines der Abschnitte (20, 14) in seine Betriebs- oder Wartungsstellung bestimmt ist.

2. Aufhängung nach Anspruch 1, **dadurch gekennzeichnet, daß** der Hebel (34) in einer Stellung auf die Verriegelungsvorrichtung (32) einwirkt, um sie zu verriegeln und in einer anderen Stellung, um sie zu entriegeln.

3. Aufhängung nach Anspruch 1 oder 2, **gekennzeichnet durch** einen schwenkbaren Halteteil (38), der mittels des Hebels (34) über einen Lenker (42) verstellbar ist.

4. Aufhängung nach einem oder mehreren der vorherigen Ansprüche, **dadurch gekennzeichnet, daß** der Halteteil (38) an dem einen Abschnitt (20) schwenkbar gelagert und an dem anderen Abschnitt (14) zur Anlage bringbar ist, wenn die Verriegelungsvorrichtung (32) ihre beide Abschnitte (14, 20) aneinander festlegende Verriegelungsstellung einnimmt.

5. Aufhängung nach einem oder mehreren der vorherigen Ansprüche, **gekennzeichnet durch** eine Anordnung des Hebels (34) und des Halteteils (38) derart, daß der Hebel (34) von dem an dem Abschnitt (20) anliegenden Halteteil (38) zu seiner einen Stellung gedrängt wird, wenn die Verriegelungsvorrichtung (32) ihre verriegelnde Stellung eingenommen hat.

6. Aufhängung nach einem oder mehreren der vorherigen Ansprüche, **gekennzeichnet durch** eine Lasche (44) im Weg des Hebels (34), an der er in seiner der Sperrung der Verriegelungsvorrichtung (32) entsprechenden Stellung zur Anlage bringbar ist.

7. Aufhängung nach einem oder mehreren der vorherigen Ansprüche, **dadurch gekennzeichnet, daß** sich in der verriegelnden Stellung der Verriegelungsvorrichtung (32) die Schwenkachse A des Hebels (34) seitlich einer Geraden G befindet, die sich durch die Verbindungsachse C des Lenkers (42) mit dem Halteteil (38) und die Verbindungsachse D des Lenkers (42) mit dem Hebel (34) erstreckt.

8. Aufhängung nach einem oder mehreren der vorherigen Ansprüche, **dadurch gekennzeichnet, daß** sich die Gerade G von einer Seite der Schwenkachse A des Hebels (34) auf die andere Seite bewegt, wenn der Hebel (34) von der Lasche (44) weg in die andere Richtung geschwenkt wird.

9. Aufhängung nach einem oder mehreren der vorherigen Ansprüche, **dadurch gekennzeichnet, daß** der eine Abschnitt (14) Arme (16) mit einer Kupplung (86) zum vertikal schwenkbaren Anschluß an das Tragfahrzeug aufweist und der andere Abschnitt (20) auf Rädern (26) abgestützt ist.

## Claims

1. A suspension of a mower housing (10) with a frame (12), which housing can be attached to a supporting vehicle, **characterized in that** the frame (12) is formed from first and second sections (14 and 20), which are vertically pivotally connected together by means of a joint (22) with a pivotal axis parallel to the standing surface, **in that** a locking device (32) is provided, which places the two sections (14, 20) in a rigid relationship with one another in an operating position and **in that** a lever (34) engages at least one of the sections (20, 14) and is adapted to adjust at least one of the sections (20, 14) into its operating or servicing position.

2. A suspension according to claim 1, **characterized in that** the lever (34) acts in one position on the locking device (32) so as to lock it and in another position so as to unlock it.

3. A suspension according to claim 1 or 2, **characterized by** a pivoted arresting part (38) which can be adjusted by means of the lever (34) through a link (42).

4. A suspension according to one or more of the preceding claims, **characterized in that** the arresting part (38) is pivotally mounted on the one section (20) and can be brought into abutment with the other section (14) when the locking device (32) assumes it locking position fixing the two sections (14, 20) relative to one another.

5. A suspension according to one or more of the preceding claims, **characterized by** an arrangement of the lever (34) and the arresting part (38) such that the lever (34) is biased by the arresting part (38) bearing on the section (20) to its one position when the locking device (32) has assumed its locking position.

6. A suspension according to one or more of the preceding claims, **characterized by** a lug (44) in the path of the lever (34), on which it can be brought into abutment in its position corresponding to blocking the locking device (32).

7. A suspension according to one or more of the preceding claims, **characterized in that** in the locking position of the locking device (32) the pivotal axis A of the lever (34) is located to the side of a straight line G which passes through the connecting axis C of the link (42) to the arresting part (38) and the connecting axis D of the link (42) to the lever (34).

8. A suspension according to one or more of the preceding claims, **characterized in that** the straight line G moves from one side of the pivotal axis A of the lever (34) to the other side when the lever (34) is swung in the other direction away from the lug (44).

9. A suspension according to one or more of the preceding claims, **characterized in that** the one section (14) has an arm (16) with a coupling (86) for the vertically pivotal attachment to the supporting vehicle and the other section (20) is supported on wheels (26).

## Revendications

1. Suspension d'un carter (10) d'unité de coupe, qui peut être raccordé à un véhicule porteur et comporte un cadre (12), **caractérisée en ce que** le cadre (12) est formé par des première et seconde parties (14) et (20), qui sont reliées entre elles de manière à pouvoir pivoter verticalement au moyen d'une articulation (22), avec un axe de pivotement parallèle à la surface d'appui, qu'il est prévu un dispositif de verrouillage (32), qui place les deux parties (14, 20), dans une position de fonctionnement, dans une relation de rigidité l'une par rapport à l'autre, et que sur au moins l'une des parties (20, 14) est accroché un levier (34), qui est destiné à régler au moins l'une des parties (20, 14) dans une position de fonctionnement ou de maintenance.

2. Suspension selon la revendication 1, **caractérisée en ce que** dans une position, le levier (34) agit sur le dispositif de verrouillage (32) pour le verrouiller et, dans une autre position, pour le déverrouiller.

3. Suspension selon la revendication 1 ou 2, **caractérisée par** une partie de retenue pivotante (38), qui est réglable à l'aide du levier (34) par l'intermédiaire d'un bras oscillant (42).

4. Suspension selon une ou plusieurs des revendications précédentes, **caractérisée en ce que** la partie de retenue (38) est montée de manière à pouvoir pivoter sur une partie (20), et peut s'appliquer sur l'autre partie (14) lorsque le dispositif de verrouillage (32) prend sa position de verrouillage qui fixe les deux parties (14, 20) l'une à l'autre.

5. Suspension selon une ou plusieurs des revendications précédentes, **caractérisée par** un montage du levier (34) et de la partie de retenue (38) de telle sorte que la partie de retenue (38), qui s'applique sur la partie (20), est repoussée dans l'une de ses positions, lorsque le dispositif de verrouillage (32) a pris sa position de verrouillage.

6. Suspension selon une ou plusieurs des revendications précédentes, **caractérisée par** une patte (44) située sur le trajet du levier (34) et sur laquelle le levier peut s'appliquer dans sa position qui correspond au blocage du dispositif de verrouillage (32).

7. Suspension selon une ou plusieurs des revendications précédentes, **caractérisée en ce que** lorsque le dispositif de verrouillage (32) est dans sa position de verrouillage, l'axe de pivotement A du levier (34) est situé d'un côté d'une droite G, qui passe par l'axe de liaison C du bras oscillant (42) avec la partie de retenue (38) et par l'axe de liaison D du bras oscillant (42) avec le levier (34).

8. Suspension selon une ou plusieurs des revendications précédentes, **caractérisée en ce que** la droite G se déplace depuis un côté de l'axe de pivotement A du levier (34) vers l'autre côté, lorsque le levier (34) est écarté par pivotement, dans l'autre direction, à partir de la patte (44).

9. Suspension selon une ou plusieurs des revendications précédentes, **caractérisée en ce qu'**une section (14) possède des bras (16) comportant un élément d'accouplement (86) pour le raccordement vertical pivotant au véhicule porteur et que l'autre section (20) est supportée par des roues (26).
